# EUROPEAN PATENT APPLICATION

(11) **EP 4 693 011 A1**
(43) Date of publication of application: **11.02.2026**
(21) Application number: 24855304.2
(22) Date of filing: 07.04.2024
(51) Int. Cl.: G06F 3/0488

(54) **TOUCH OPERATION CONTROL METHOD AND SYSTEM, AND COMPUTER READABLE STORAGE MEDIUM**

(30) Priority: 18.08.2023 CN 202311055385
(71) Applicant: Shenzhen Hitevision Technology Co., Ltd., Shenzhen, Guangdong 518000 (CN)
(72) Inventor: LI, Wanting, Shenzhen, Guangdong 518000 (CN)
(74) Representative: Slingsby Partners LLP
(86) International application number: PCT/CN2024/086321
(87) International publication number: WO 2025/039573

(57) **Abstract**

The present application is applicable to the touch technical field, and provides a touch operation control method, a touch operation control system, and a computer-readable storage medium. The touch operation control method includes: acquiring (S21) touch data corresponding to a touch operation of a user by the touch module (101); sending (S22), under a condition the sub-window is in an open state, the touch data to the main control platform (102) by the touch module (101); sending (S23), under a condition the main control platform (102) determines an object of the touch operation is the external access platform (103), the touch data to the external access platform (103) by the main control platform (102) via the touch module (101) to cause the external access platform (103) to respond based on the touch data; and responding (S24) by the main control platform (102) based on the touch data under a condition that the main control platform (102) determines the object is the main control platform (102).

## Description

### CROSS-REFERENCE TO RELATED APPLICATION

The present application claims priority to Chinese Patent Application No. 202311055385.7 filed on, August 18, 2023, which is incorporated herein by reference in its entirety.

### TECHNICAL FIELD

The present application relates to the touch technical field, and particularly, to a touch operation control method, a touch operation control system, and a computer-readable storage medium.

### BACKGROUND

At present, touch operation is used more and more frequently in the fields such as industrial control. For multi-system scenarios, touch channels need to be switched to perform touch operations on different systems. However, the touch channels are often connected to the main system, and the external access device cannot be directly operated by the touch operation, so that the user needs to switch the touch channel to connect to the external access device to achieve the touch operation for the external access device, which makes the control process of the touch operation cumbersome and affects the user experience.

### SUMMARY

Embodiments of the present application provide a touch operation control method, a touch operation control system, and a computer-readable storage medium. Therefore, the problem in the related art that the user needs to switch the touch channel to connect to the external access device to achieve the touch operation for the external access device, causing the control process of the touch operation to be cumbersome and affecting the user experience may be solved.

In a first aspect, embodiments of the present application provide a touch operation control method applicable to a touch operation control system, the touch operation control system includes a touch module, a main control platform, and at least one external access platform, the main control platform and the external access platform are both connected to the touch module; the main control platform is provided with a sub-window, the sub-window is configured to achieve touch interaction between the main control platform and the external access platform; and
the touch operation control method includes:
acquiring touch data corresponding to a touch operation of a user by the touch module;
sending, under a condition that the sub-window is in an open state, the touch data to the main control platform by the touch module;
sending, under a condition that the main control platform determines that an object of the touch operation is the external access platform, the touch data to the external access platform by the main control platform via the touch module to cause the external access platform to respond based on the touch data; and
responding by the main control platform based on the touch data under a condition that the main control platform determines that the object of the touch operation is the main control platform.

In a second aspect, embodiments of the present application provide a touch operation control system including a touch module, a main control platform, and at least one external access platform, the main control platform and the external access platform are both connected to the touch module; the main control platform is provided with a sub-window;
the touch module is configured to acquire touch data corresponding to a touch operation of a user and send the touch data to the main control platform;
the main control platform is configured to send, under a condition that an object of the touch operation is the external access platform, the touch data to the external access platform via the touch module to cause the external access platform to respond based on the touch data, and respond based on the touch data under a condition that the object of the touch operation is the main control platform; and
the sub-window is configured to achieve touch interaction between the main control platform and the external access platform.

In a third aspect, embodiments of the present application provide a computer-readable storage medium storing a computer program that, when executed by a processor, implements the touch operation control method.

In the touch operation control method according to the first aspect of the embodiments of the present application, the touch module acquires the touch data corresponding to the touch operation of the user; under a condition that the sub-window of the external access platform is in the open state, the touch module sends the touch data to the main control platform, and the object of the touch operation is determined by the main control platform; under a condition that the object of the touch operation is the external access platform, the main control platform sends the touch data to the external access platform via the touch module to cause the external access platform to respond based on the touch data; under a condition that the object of the touch operation is the main control platform, the main control platform directly responds based on the touch data, so that the user can achieve the touch operation for the external access device without switching the touch channel, achieving the reuse touch in multi-platform scenarios, simplifying the control process of the touch operation, and improving the user experience.

It may be understood that, reference for the beneficial effects of the second aspect and the third aspect may be made to the related description of the first aspect, which is not repeated herein.

### BRIEF DESCRIPTION OF THE DRAWINGS

In order to illustrate the technical solutions in the specific embodiments of the present application and the related art more clearly, the drawings to be used in the description of the specific embodiments or the related art will be briefly introduced below. It is obvious that the drawings described below are some embodiments of the present application, and for those of ordinary skilled in the art, other drawings may be obtained based on these drawings without inventive effort.
Fig. 1 is a first structural schematic view of a touch operation control system according to embodiments of the present application;
Fig. 2 is a first schematic flowchart of a touch operation control method according to embodiments of the present application;
Fig. 3 is a second schematic flowchart of a touch operation control method according to embodiments of the present application;
Fig. 4 is a third schematic flowchart of a touch operation control method according to embodiments of the present application;
Fig. 5 is a second structural schematic view of a touch operation control system according to embodiments of the present application;
Fig. 6 is a fourth schematic flowchart of a touch operation control method according to embodiments of the present application;
Fig. 7 is a fifth schematic flowchart of a touch operation control method according to embodiments of the present application; and
Fig. 8 is a sixth schematic flowchart of a touch operation control method according to embodiments of the present application.

### DETAILED DESCRIPTION

In the following description, specific details such as specific system structures and techniques are presented for illustration but not for limitation to thoroughly understand the embodiments of the present application. However, it will be apparent to those skilled in the art that the present application may be implemented in other embodiments which do not have these specific details. In other situations, detailed descriptions of well-known systems, devices, circuits, and methods are omitted so as not to obstruct the description of the present application with unnecessary details.

It should be understood that, when used in the specification and the appended claims of present application, the term "comprising/including", indicates the presence of described features, whole subjects, steps, operations, elements, and/or components, but does not preclude the presence or addition of one or more other features, whole subjects, steps, operations, elements, components, and/or collections thereof.

It should also be understood that, the term "and/or" used in the specification and the appended claims of the present application refers to any combination and all possible combinations of one or more of the associated and listed items, and includes these combinations.

As used in the specification and the appended claims of the present application, the term "if" may be explained as "when" or "once" or "in response to determining" or "in response to detecting" depending on the context. Similarly, "if......, determining" or "if [the described condition or event] is detected" may be explained to mean "once......, determining" or "in response to......, determining" or "once [the described condition or event] is detected" or "in response to detecting [the described condition or event]" depending on the context.

In addition, in the description of the specification and the appended claims of the present specification, the terms such as "first", "second", and "third" are intended only to distinguish, and are not to be understood as indicating or implying relative importance.

Referring to "one embodiment" or "some embodiments" or the like mentioned in the specification of the present application means that a particular feature, structure, or characteristic described in conjunction with the embodiment is included in one or more embodiments of the present application. Thus, the expressions such as "in one embodiment", "in some embodiments", "in some other embodiments", "in some yet other embodiments" that appear in different places in the specification do not necessarily all refer to the same embodiment, but mean "one or more, but not all, of the embodiments", unless otherwise specifically emphasized. The terms "comprising", "including", "having" and variations thereof mean "including, but not limited to" unless otherwise specifically emphasized. "A plurality of" means "two or more".

At present, touch operation is used more and more frequently in the fields such as industrial control. For multi-system scenarios, touch channels need to be switched to perform touch operations on different systems. However, the touch channel is often connected to the main system, and the external access device cannot be directly operated by the touch operation, so that the user needs to switch the touch channel to connect to the external access device to achieve the touch operation for the external access device, which makes the control process of the touch operation cumbersome and affects the user experience.

In view of the above problems, embodiments of the present application provide a touch operation control method applicable to a touch operation control system, the touch operation control system includes a touch module, a main control platform, and at least one external access platform, and the main control platform and the external access platform are both connected to the touch module; the main control platform is provided with a sub-window configured to achieve touch interaction between the main control platform and the external access platform. In the touch operation control method, the touch module acquires the touch data corresponding to the touch operation of the user; under a condition that the sub-window of the external access platform is in the open state, the touch module sends the touch data to the main control platform; under a condition that the main control platform determines that the object of the touch operation is the external access platform, the main control platform sends the touch data to the external access platform via the touch module to cause the external access platform to respond based on the touch data; under a condition that the main control platform determines that the object of the touch operation is the main control platform, the main control platform responds based on the touch data, so that the user may achieve the touch operation for the external access device without switching the touch channel.

The touch operation control method according to the embodiments of the present application will be exemplarily described below in conjunction with the specific embodiments.

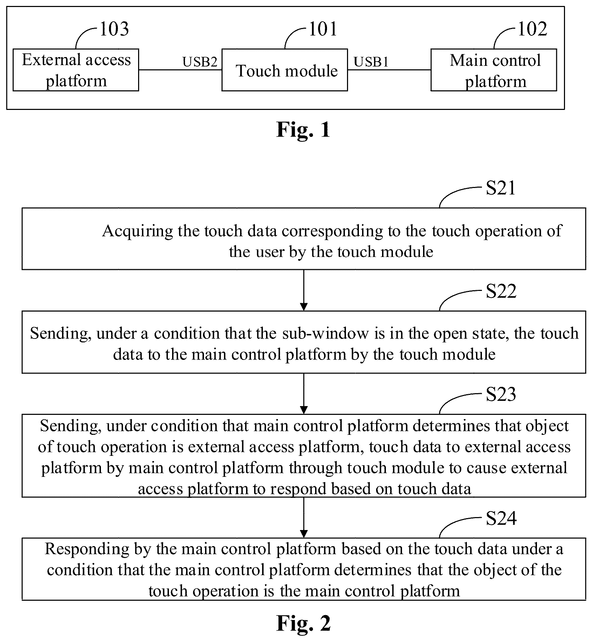

The touch operation control method according to the embodiments of the present application is applicable to the touch operation control system. As shown in Fig. 1, the touch operation control system includes a touch module 101, a main control platform 102, and at least one external access platform 103, and the main control platform 102 and the external access platform 103 are both connected to the touch module 101. The main control platform 102 is provided with a sub-window configured to achieve the touch interaction between the main control platform 102 and the external access platform 103.

In application, the main control platform 102 may be a control system of the main system, and may be a Windows operating system based on the x86 hardware platform or an Android system. The external access platform 103 may be a control system of the external access device. The main control platform 102 and the external access platform 103 may be connected to the touch module 101 by a USB interface; the main control platform 102 is connected to the touch module 101 by the USB1 interface, and the external access platform 103 is connected to the touch module 101 by the USB2 interface. The sub-window may be an application provided in the main control platform 102, and may be opened on the touch screen to display the image input by the external access platform 103, achieving the touch interaction between the main control platform 102 and the external access platform 103. The touch module 101 and the main control platform 102 may be integrated with the touch screen in one device.

As shown in Fig. 2, the touch operation control method according to this embodiment includes steps of S21 to S24.

S21: acquiring touch data corresponding to the touch operation of the user by the touch module.

In application, the touch module acquires the touch data corresponding to the touch operation of the user; under a condition that the user performs the touch operation on the touch screen, the touch module may acquire the touch data corresponding to the touch operation of the user. The touch data may include the coordinate data of the touch point corresponding to the touch operation on the touch screen.

S22, sending, under a condition that the sub-window is in the open state, the touch data to the main control platform by the touch module.

In application, under a condition that the sub-window of the external access platform is in the open state, the touch module sends the touch data to the main control platform; after the user opens the sub-window by a pressing button or a remote control, the touch module may send the touch data to the main control platform via the USB1 interface, so that the object of the touch operation is determined by the main control platform.

S23, sending, under a condition that the main control platform determines that the object of the touch operation is the external access platform, the touch data to the external access platform by the main control platform via the touch module to cause the external access platform to respond based on the touch data.

In application, under a condition that the main control platform determines that the object of the touch operation is the external access platform, the main control platform sends the touch data to the external access platform via the touch module; under a condition that the main control platform determines that the touch operation is the operation performed by the user on the external access platform via the sub-window, the main control platform may determine that the object of the touch operation is the external access platform, the main control platform may send the touch data to the touch module via the USB1 interface, and then the touch module may send the touch data to the external access platform via the USB2 interface, causing the external access platform to respond based on the touch data.

In an embodiment, the sub-window includes a sub-window menu bar and an external platform input image. The sub-window menu bar of the sub-window may be a menu bar in which the main control platform adjusts the function of the sub-window, the external platform input image may be an image input by the external access platform, and the user may achieve the touch interaction between the main control platform and the external access platform via the external platform input image.

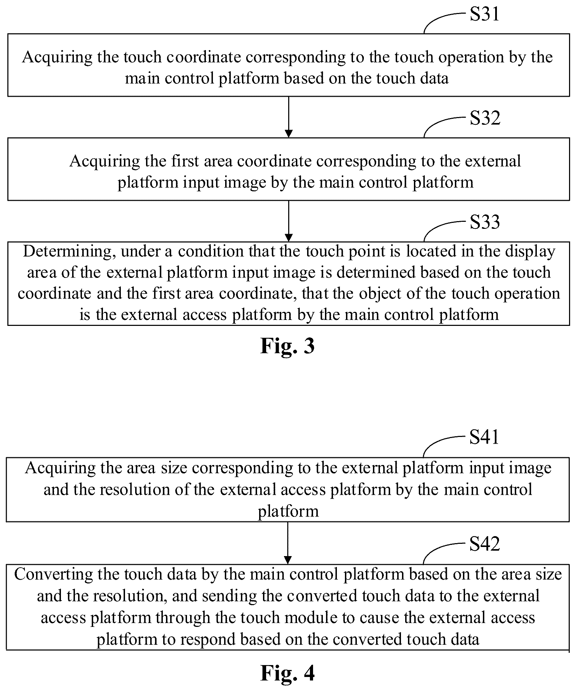

As shown in Fig. 3, in an embodiment, the determining that the object of the touch operation is the external access platform by the main control platform includes S31 to S33.

S31: acquiring a touch coordinate corresponding to the touch operation by the main control platform based on the touch data. The touch coordinate characterizes the position of the touch point corresponding to the touch operation.

In application, the main control platform acquires the touch coordinate corresponding to the touch operation based on touch data; after the touch module sends the touch data to the main control platform, the main control platform may determine the touch coordinate based on the touch data. The touch coordinate characterizes the position of the touch point corresponding to the touch operation on the touch screen.

S32: acquiring a first area coordinate corresponding to the external platform input image by the main control platform. The first area coordinate characterizes the position of the display area of the external platform input image.

In application, the main control platform acquires the first area coordinate corresponding to the external platform input image; under a condition that the sub-window is in the open state, the main control platform may determine the first area coordinate corresponding to the external platform input image based on the display area of the external platform input image on the touch screen. The first area coordinate characterizes the position of the display area of the external platform input image on the touch screen.

S33: determining, under a condition that the touch point is located in the display area of the external platform input image is determined based on the touch coordinate and the first area coordinate, that the object of the touch operation is the external access platform by the main control platform.

In application, under a condition that it is determined that the touch point is located in the display area of the external platform input image based on the touch coordinate and the first area coordinate, the main control platform determines that the object of the touch operation is the external access platform; under a condition that the touch coordinate is contained in the range of the first area coordinate, it may be determined that the touch point corresponding to the touch operation is located in the display area of the external platform input image; under this condition, the main control platform may determine that the touch operation is the operation performed by the user on the external access platform via the sub-window, that is, the object of the touch operation is the external access platform.

In the touch operation control method according to the embodiments of the present application, the main control platform acquires the touch coordinate corresponding to the touch operation and the first area coordinate corresponding to the external platform input image; and under a condition that it is determined that the touch point is located in the display area of the external platform input image based on the touch coordinate and the first area coordinate, the main control platform determines that the object of the touch operation is the external access platform, so that whether the object of the touch operation is the external access platform can be accurately determined, facilitating the control over the touch operation.

As shown in Fig. 4, in an embodiment, the sending the touch data to the external access platform by the main control platform via the touch module to cause the external access platform to respond based on the touch data includes S41 to S42:

S41: acquiring an area size corresponding to the external platform input image and the resolution of the external access platform by the main control platform. The area size characterizes the size of the display area of the external platform input image.

In application, since, for the main control platform and the external access platform, the touch data may be different from each other, under a condition that the main control platform sends the touch data to the external access platform via the touch module, the touch data needs to be converted, so that the touch data corresponds to the external access platform. The main control platform acquires the area size corresponding to the external platform input image; under a condition that the sub-window is in the open state, the main control platform may determine the area size corresponding to the external platform input image based on the display area of the external platform input image on the touch screen. The area size characterizes the size of the display area of the external platform input image on the touch screen. The resolution may be a resolution of the screen of the external access platform.

S42, converting the touch data by the main control platform based on the area size and the resolution, and sending the converted touch data to the external access platform via the touch module to cause the external access platform to respond based on the converted touch data.

In application, the main control platform converts the touch data based on the area size and the resolution; the main control platform may convert the touch data into the data corresponding to the external access platform based on the area size and the resolution. The touch module sends the converted touch data to the external access platform; the main control platform may send the converted touch data to the touch module via the USB 1 interface, and then the touch module may send the converted touch data to the external access platform via the USB2 interface, causing the external access platform to respond based on the converted touch data.

In the touch operation control method according to the embodiments of the present application, the area size corresponding to the external platform input image and the resolution of the external access platform are acquired by the main control platform, the touch data is converted based on the area size and the resolution, and the converted touch data is sent to the external access platform via the touch module, ensuring that the external access platform responds normally.

S24: responding by the main control platform based on the touch data under a condition that the main control platform determines that the object of the touch operation is the main control platform.

In application, under a condition that the main control platform determines that the object of the touch operation is the main control platform, the main control platform responds based on the touch data; under a condition that the main control platform determines that the touch operation is the operation performed by the user directly on the main control platform, the main control platform may determine that the object of the touch operation is the main control platform, and the main control platform may respond directly based on the touch data.

In the touch operation control method according to the embodiments of the present application, the touch module acquires the touch data corresponding to the touch operation of the user; under a condition that the sub-window of the external access platform is in the open state, the touch module sends the touch data to the main control platform, and the object of the touch operation is determined by the main control platform; under a condition that the object of the touch operation is the external access platform, the main control platform sends the touch data to the external access platform via the touch module to cause the external access platform to respond based on the touch data; under a condition that the object of the touch operation is the main control platform, the main control platform directly responds based on the touch data, so that the user can achieve the touch operation for the external access device without switching the touch channel, achieving the reuse touch in multi-platform scenarios, simplifying the control process of the touch operation, and improving the user experience.

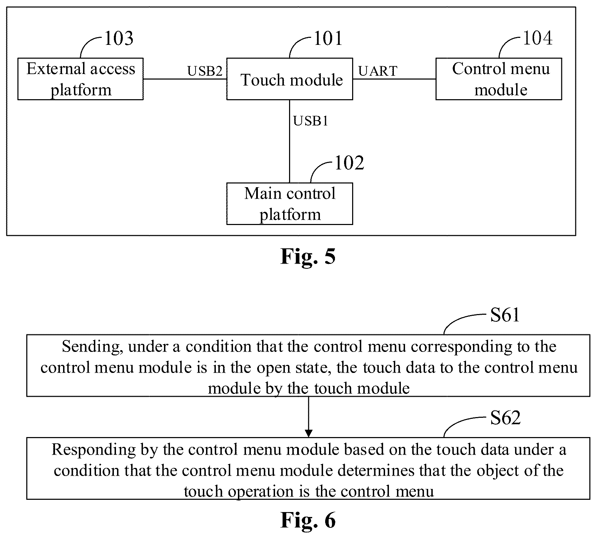

As shown in Fig. 5, in an embodiment, the touch operation control system further includes a control menu module 104 connected to the touch module 101.

In application, the control menu module 104 may be an on-screen display (OSD) module, and the control menu module 104 may be connected to the touch module 101 via the UART serial port.

As shown in Fig. 6, in an embodiment, the touch operation control method further includes S61 to S62.

S61: sending, under a condition that the control menu corresponding to the control menu module is in the open state, the touch data to the control menu module by the touch module.

In application, the control menu may be set by the control menu module, and may be opened and displayed on the touch screen to adjust an image, a sound and other functions of the touch screen. Under a condition that the control menu corresponding to the control menu module is in the open state, the touch module sends the touch data to the control menu module; after the user calls the control menu by a pressing button or a remote control, the control menu module may send a command to the touch module via the UART serial port, and the command may need to be agreed by both the control menu module and the touch module; the touch module may close the communication between the USB1 interface and the USB2 interface, and send the touch data to the control menu module via the UART serial port; the control menu module may read the touch data from the UART serial port, parse the touch data into the touch event that may be recognized by the control menu module itself, and determine whether the object of the touch operation is the control menu.

S62: responding by the control menu module based on the touch data under a condition that the control menu module determines that the object of the touch operation is the control menu.

In application, under a condition that the control menu module determines that the object of the touch operation is the control menu, the control menu module responds based on the touch data; under a condition that the control menu module determines that the touch operation is the operation performed by the user on the control menu, the control menu module may determine that the object of the touch operation is the control menu, and the control menu module may respond based on the touch data.

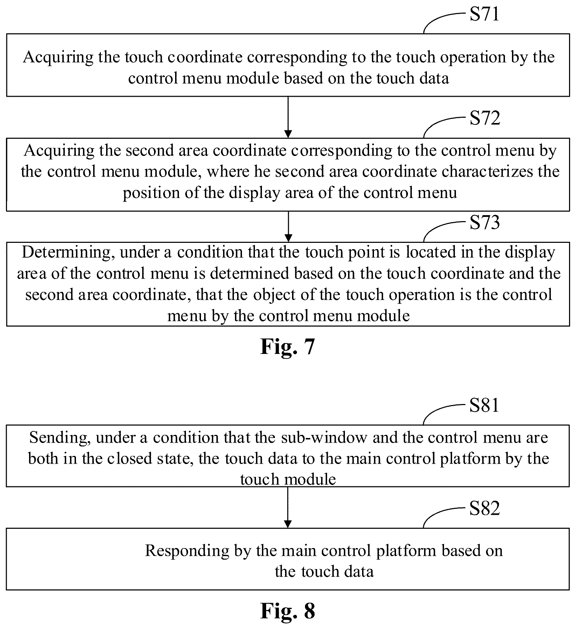

As shown in Fig. 7, in an embodiment, determining that the object of the touch operation is the control menu by the control menu module includes S71 to S73.

S71: acquiring the touch coordinate corresponding to the touch operation by the control menu module based on the touch data. The touch coordinate characterizes the position of the touch point corresponding to the touch operation.

In application, the control menu module acquires the touch coordinate corresponding to the touch operation based on the touch data; after the touch module sends the touch data to the control menu module, the control menu module may determine the touch coordinate based on the touch data. The touch coordinate characterizes the position of the touch point corresponding to the touch operation on the touch screen.

S72: acquiring the second area coordinate corresponding to the control menu by the control menu module. The second area coordinate characterizes the position of the display area of the control menu.

In application, the control menu module acquires the second area coordinate corresponding to the control menu; under a condition that the control menu is in the open state, the control menu module determines the second area coordinate corresponding to the control menu based on the display area of the control menu on the touch screen. The second area coordinate characterizes the position of the display area of the control menu on the touch screen.

S73: determining, under a condition that the touch point is located in the display area of the control menu is determined based on the touch coordinate and the second area coordinate, that the object of the touch operation is the control menu by the control menu module.

In application, under a condition that it is determined that the touch point is located in the display area of the control menu based on the touch coordinate and the second area coordinate, the control menu module determines that the object of the touch operation is the control menu; under a condition that the touch coordinate is contained in the range of the second area coordinate, it may be determined that the touch point corresponding to the touch operation is located in the display area of the control menu; under this condition, the control menu module may determine that the touch operation is the operation performed by the user on the control menu, that is, the object of the touch operation is the control menu.

In the touch operation control method according to the embodiments of the present application, the control menu module acquires the touch coordinate corresponding to the touch operation and the second area coordinate corresponding to the control menu, and under a condition that it is determined that the touch point is located in the display area of the control menu based on the touch coordinate and the second area coordinate, the control menu module determines that the object of the touch operation is the control menu, so that whether the object of the touch operation is the control menu can be accurately determined, facilitating the control over the touch operation.

In an embodiment, the touch operation control method further includes: closing, under a condition that the touch point is located outside the display area of the control menu is determined based on the touch coordinate and the second area coordinate, the control menu by the control menu module.

In application, under a condition that it is determined that the touch point is located outside the display area of the control menu based on the touch coordinate and the second area coordinate, the control menu module closes the control menu; under a condition that the touch coordinate is not contained in the range of the second area coordinate, it may be determined that the touch point corresponding to the touch operation is located outside the display area of the control menu, under this condition, the control menu module may determine that the touch operation is not the operation performed by the user on the control menu, that is, the object of the touch operation is not the control menu, then the control menu module closes the control menu and sends a command to the touch module to open the communication between the USB1 interface and the USB2 interface, and under this condition, the control menu module does not read the touch data sent by the UART serial port.

In an embodiment, determining that the object of the touch operation is the main control platform by the main control platform includes: determining, under a condition that the control menu is in the closed state, and the touch point is located outside the display area of the external platform input image is determined based on the touch coordinate and the first area coordinate, that the object of the touch operation is the main control platform by the main control platform.

In application, under a condition that the control menu is closed, and it is determined that the touch point is located outside the display area of the external platform input image based on the touch coordinate and the first area coordinate, the main control platform determines that the object of the touch operation is the main control platform; under a condition that the control menu is in the closed state, and the touch coordinate is not contained in the range of the first area coordinate, it may be determined that the touch point corresponding to the touch operation is located outside the display area of the external platform input image, and under this condition, the main control platform may determine that the touch operation is the operation directly performed by the user on the main control platform, that is, the object of the touch operation is the main control platform.

As shown in Fig. 8, in an embodiment, the touch operation control method further includes S81 to S82.

S81, sending, under a condition that the sub-window and the control menu are both in the closed state, the touch data to the main control platform by the touch module.

S82: responding by the main control platform based on the touch data.

In application, under a condition that the sub-window and the control menu are both in the closed state, the touch module sends the touch data to the main control platform; under a condition that neither the sub-window nor the control menu is opened on the touch screen, the object of the touch operation is the main control platform by default, and the touch module sends the touch data to the main control platform via the USB1 interface according to a standard HID event to cause the main control platform to respond based on the touch data. Since the sub-window is not opened under this condition, the USB2 interface does not operate.

In the touch operation control method according to the embodiments of the present application, under a condition that the control menu corresponding to the control menu module is in the open state, the touch module sends the touch data to the control menu module, under a condition that the control menu module determines that the object of the touch operation is the control menu, the control menu module responds based on the touch data, under a condition that the control menu module determines that the object of the touch operation is not the control menu, the control menu module closes the control menu, and under a condition that the sub-window and the control menu are both in the closed state, the main control platform directly responds based on the touch data, so that the convenience and practicability of the touch operation control method can be further improved.

A touch operation control system according to the present application will be exemplarily described below with reference to the drawings.

Corresponding to the touch operation control method described in the above embodiments, as shown in Fig. 1, the present embodiment provides a touch operation control system, the touch operation control system includes a touch module 101, a main control platform 102, and at least one external access platform 103, and the main control platform 102 and the external access platform 103 are both connected to the touch module 101. The main control platform 102 is provided with a sub-window configured to achieve the touch interaction between the main control platform 102 and the external access platform 103.

As shown in Fig. 5, in an embodiment, the touch operation control system further includes a control menu module 104 connected to the touch module 101.

It should be noted that, since the information interaction and execution process between the above modules/platforms are based on the same concept as the method embodiments of the present application, reference for the specific functions and technical effects thereof may be made to the method embodiments, which is not repeated herein.

It may be clearly understood by a person skilled in the art that, for the convenience and brevity of description, the above division of various functional units and modules is merely exemplified. In practice, the above function allocation may be completed by different functional units and modules based on needs, that is, the internal structure of the system is divided into different functional units or modules to complete all or part of the above functions. The functional units and modules in the embodiments may be integrated in one processing unit, or the units may physically exist separately, or two or more units may be integrated in one unit, and the above integrated unit may be implemented in the form of hardware or in the form of a software functional unit. In addition, the specific names of the functional units and modules are only for facilitating distinction, and are not intended to limit the protection scope of the present application. Reference may be made to the corresponding processes in the foregoing method embodiments for the specific operating processes of the units and modules in the above system, which is not repeated herein.

Embodiments of the present application further provide a computer-readable storage medium, the computer-readable storage medium stores a computer program, and the computer program, when executed by a processor, may implement the steps in the above method embodiments.

In application, the processor may be a Central Processing Unit (CPU) or other general purpose processor, a Digital Signal Processor (DSP), an Application Specific Integrated Circuit (ASIC), a Field-Programmable Gate Array (FPGA), or other programmable logic device, discrete gate or transistor logic device, discrete hardware component, or the like. The general purpose processor may be a microprocessor or may be any conventional processor.

In the present application, all or a part of the processes in the above method embodiments may be completed by instructing associated hardware by the computer program, and the computer program may be stored in the computer-readable storage medium, and the computer program, when executed by the processor, may implement the steps of the above method embodiments. The computer program includes the computer program code, and the computer program code may be in the form of source code, object code, executable file, or in some intermediate forms. The computer-readable medium may include at least any entity or device, a recording medium, a computer memory, a Read-Only Memory (ROM), a Random Access Memory (RAM), an electrical carrier signal, a telecommunication signal, and a software distribution medium which are capable of carrying the computer program code to an electronic device; for example, USB flash disk, mobile hard disk, magnetic disk or optical disk.

In the above embodiments, the description of each embodiment has emphasis, and for parts that are not described or recited in detail in a certain embodiment, reference may be made to the related description of other embodiments.

It may be appreciated by those of ordinary skill in the art that the device and the steps of the algorithmic of the examples described in conjunction with the embodiments disclosed herein can be implemented in electronic hardware, or a combination of computer software and electronic hardware. Whether these functions are performed in hardware or software depends on particular application and design constraints of the technical solutions. Those skilled in the art may use different methods for each particular application to implement the functions, but such implementation should not be considered beyond the scope of the present application.

In the embodiments according to the present application, it should be understood that the disclosed device and methods may be implemented in other ways. For example, the above device embodiments are only examples. In addition, the coupling, or direct coupling, or communicative connection between each other that are shown or discussed may be achieved by some interfaces, and the indirect coupling or communicative connection of devices may be electrical, mechanical or in other forms.

The above embodiments are only intended to illustrate, rather than to limit, the technical solutions of the present application. Although the present application has been described in detail with reference to the foregoing embodiments, those of ordinary skill in the art should understand that modifications may still be made to the technical solutions recited in the foregoing embodiments, or equivalent replacements may be made to a part of the technical features. However, these modifications or replacements do not cause the essence of the corresponding technical solutions to deviate from the gist and scope of the technical solutions of the embodiments of the present application, and should be encompassed in the protection scope of the present application.

## Claims

1. A touch operation control method applicable to a touch operation control system, the touch operation control system comprising a touch module, a main control platform, and at least one external access platform, the main control platform and the at least one external access platform being both connected to the touch module; the main control platform being provided with a sub-window configured to achieve touch interaction between the main control platform and the external access platform,
the touch operation control method comprising:
acquiring touch data corresponding to a touch operation of a user by the touch module;
sending, under a condition that the sub-window is in an open state, the touch data to the main control platform by the touch module;
sending, under a condition that the main control platform determines that an object of the touch operation is the external access platform, the touch data to the external access platform by the main control platform via the touch module to cause the external access platform to respond based on the touch data; and
responding by the main control platform based on the touch data under a condition that the main control platform determines that the object of the touch operation is the main control platform.

2. The touch operation control method according to claim 1, wherein the sub-window comprises a sub-window menu bar and an external platform input image; and
the main control platform determines that an object of the touch operation is the external access platform comprises:
acquiring a touch coordinate corresponding to the touch operation by the main control platform based on the touch data, wherein the touch coordinate characterizes a position of a touch point corresponding to the touch operation;
acquiring a first area coordinate corresponding to the external platform input image by the main control platform, wherein the first area coordinate characterizes a position of a display area of the external platform input image; and
determining, under a condition that the touch point is located in the display area of the external platform input image is determined based on the touch coordinate and the first area coordinate, that the object of the touch operation is the external access platform by the main control platform.

3. The touch operation control method according to claim 1, wherein the sending the touch data to the external access platform by the main control platform via the touch module to cause the external access platform to respond based on the touch data comprises:
acquiring an area size corresponding to the external platform input image and a resolution of the external access platform by the main control platform, wherein the area size characterizes a size of the display area of the external platform input image; and
converting the touch data by the main control platform based on the area size and the resolution, and sending the converted touch data to the external access platform via the touch module to cause the external access platform to respond based on the converted touch data.

4. The touch operation control method according to claim 2, the touch operation control system further comprising a control menu module connected to the touch module; and
the touch operation control method further comprising:
sending, under a condition that a control menu corresponding to the control menu module is in an open state, the touch data to the control menu module by the touch module;
responding by the control menu module based on the touch data under a condition that the control menu module determines that the object of the touch operation is the control menu.

5. The touch operation control method according to claim 4, wherein the control menu module determines that the object of the touch operation is the control menu comprises:
acquiring a touch coordinate corresponding to the touch operation by the control menu module based on the touch data, wherein the touch coordinate characterizes a position of a touch point corresponding to the touch operation;
acquiring a second area coordinate corresponding to the control menu by the control menu module, wherein the second area coordinate characterizes a position of a display area of the control menu; and
determining, under a condition that the touch point is located in the display area of the control menu is determined based on the touch coordinate and the second area coordinate, that the object of the touch operation is the control menu by the control menu module.

6. The touch operation control method according to claim 5, further comprising:
closing, under a condition that the touch point is located outside the display area of the control menu is determined based on the touch coordinate and the second area coordinate, the control menu by the control menu module.

7. The touch operation control method according to claim 4, wherein determining that the object of the touch operation is the main control platform by the main control platform comprises:
determining, under a condition that the control menu is in a closed state, and the touch point is located outside the display area of the external platform input image is determined based on the touch coordinate and the first area coordinate, that the object of the touch operation is the main control platform by the main control platform.

8. The touch operation control method according to claim 4, further comprising:
sending, under a condition that the sub-window and the control menu are both in the closed state, the touch data to the main control platform by the touch module; and
responding by the main control platform based on the touch data.

9. A touch operation control system comprising a touch module, a main control platform, and at least one external access platform, the main control platform and the external access platform being both connected to the touch module, and the main control platform being provided with a sub-window, wherein
the touch module is configured to acquire touch data corresponding to a touch operation of a user and send the touch data to the main control platform;
the main control platform is configured to send, under a condition that an object of the touch operation is the external access platform, the touch data to the external access platform via the touch module to cause the external access platform to respond based on the touch data, and respond based on the touch data under a condition that the object of the touch operation is the main control platform; and
the sub-window is configured to achieve touch interaction between the main control platform and the external access platform.

10. The touch operation control system according to claim 9, wherein the sub-window comprises a sub-window menu bar and an external platform input image; and
the main control platform is specifically configured to:
acquire a touch coordinate corresponding to the touch operation based on the touch data, wherein the touch coordinate characterizes a position of a touch point corresponding to the touch operation;
acquire a first area coordinate corresponding to the external platform input image, wherein the first area coordinate characterizes a position of a display area of the external platform input image; and
determine, under a condition that the touch point is located in the display area of the external platform input image is determined based on the touch coordinate and the first area coordinate, that the object of the touch operation is the external access platform.

11. The touch operation control system according to claim 9, wherein the main control platform is specifically configured to:
acquire an area size corresponding to the external platform input image and a resolution of the external access platform, wherein the area size characterizes a size of the display area of the external platform input image; and
convert the touch data based on the area size and the resolution, and send the converted touch data to the external access platform via the touch module to cause the external access platform to respond based on the converted touch data.

12. The touch operation control system according to claim 10, further comprising a control menu module connected to the touch module,
the touch module being specifically configured to:
send, under a condition that a control menu corresponding to the control menu module is in an open state, the touch data to the control menu module;
respond based on the touch data under a condition that the control menu module determines that the object of the touch operation is the control menu.

13. The touch operation control system according to claim 12, wherein the control menu module is specifically configured to:
acquire a touch coordinate corresponding to the touch operation based on the touch data, wherein the touch coordinate characterizes a position of a touch point corresponding to the touch operation;
acquire a second area coordinate corresponding to the control menu, wherein the second area coordinate characterizes a position of a display area of the control menu; and
determine, under a condition that the touch point is located in the display area of the control menu is determined based on the touch coordinate and the second area coordinate, that the object of the touch operation is the control menu.

14. The touch operation control system according to claim 13, wherein the control menu module is further configured to close the control menu under a condition that the touch point is located outside the display area of the control menu is determined based on the touch coordinate and the second area coordinate.

15. The touch operation control system according to claim 12, wherein the main control platform is specifically configured to:
determine, under a condition that the control menu is in a closed state, and the touch point is located outside the display area of the external platform input image is determined based on the touch coordinate and the first area coordinate, that the object of the touch operation is the main control platform.

16. The touch operation control system according to claim 12, wherein the touch module is further configured to send, under a condition that the sub-window and the control menu are both in the closed state, the touch data to the main control platform; and
the main control platform is further configured to respond based on the touch data.

17. A computer-readable storage medium storing a computer program that, when executed by a processor, implements the touch operation control method according to any one of claims 1 to 8.
